# EUROPÄISCHE PATENTSCHRIFT

(11) **EP 0 855 952 B1**
(45) Veröffentlichungstag und Bekanntmachung des Hinweises auf die Patenterteilung: **02.06.1999**
(21) Anmeldenummer: 96945519.5
(22) Anmeldetag: 18.10.1996
(51) Int. Cl.: B29C 41/22, B29C 41/18

(54) **VERFAHREN ZUR HERSTELLUNG EINER MEHRFARBIGEN THERMOPLASTISCHEN KUNSTSTOFFOLIE SOWIE MEHRFARBIGE THERMOPLASTISCHE KUNSTSTOFFOLIE**
PROCESS FOR PRODUCING A MULTI-COLOURED THERMOPLASTIC PLASTICS FOIL, AND A MULTI-COLOURED THERMOPLASTIC PLASTICS FOIL
PROCEDE DE PRODUCTION D'UN FILM THERMOPLASTIQUE MULTICOLORE ET FILM THERMOPLASTIQUE MULTICOLORE OBTENU A L'AIDE DUDIT PROCEDE

(30) Priorität: 21.10.1995 DE 19539261
(43) Veröffentlichungstag der Anmeldung: 05.08.1998
(73) Patentinhaber: Benecke-Kaliko Aktiengesellschaft, D-30419 Hannover (DE)
(72) Erfinder: EYSEL, Konrad, D-73329 Kuchen (DE); BARGIEL, Lothar, D-73066 Uhingen (DE); REICHERT, Dieter, D-73084 Salach (DE); PRÖPPER, Johannes, D-73054 Eislingen (DE)
(74) Vertreter: Körner, Peter
(86) Internationale Anmeldenummer: DE9601999
(87) Internationale Veröffentlichungsnummer: WO9715429

(56) Entgegenhaltungen:
- EP-A- 0 176 274
- DE-A- 3 637 524
- FR-A- 2 564 772
- GB-A- 2 082 108
- US-A- 3 253 068
- KUNSTSTOFFBERATER, Bd. 31, Nr. 7/8, 7.August 1986, Seiten 51-53, XP002031027 REINHARD SAFFERT: "Armaturenbrett-Fertigung nach der PVC-Powder-Slush Technologie" in der Anmeldung erwähnt

## Beschreibung

Die Erfindung betrifft ein Verfahren zur Herstellung einer mehrfarbigen thermoplastische Kunststoffolie nach dem Oberbegriff des Anspruchs 1 sowie eine mehrfarbige thermoplastische Kunststoffolie nach dem Oberbegriff des Anspruchs 10.

Aus der DE 36 37 524 C2 ist eine mehrfarbige thermoplastische Folie bekannt, die aus einem einfarbigen Grundmaterial und einer andersfarbigen Beimischung besteht. Die andersfarbige Beimischung umfaßt Partikel, die wesentlich größer als Pigmente sind und eine näherungsweise Kugelgestalt aufweisen. Bei der Erweichungstemperatur des Grundmaterials sind die andersfarbigen Beimischungen fest oder zumindest wesentlich zäher als das Grundmaterial. Die andersfarbige Beimischung ist außerdem kleiner als die Folienwandstärke, so daß die geometrische Form dieser Partikel im wesentlichen unverändert bleibt. Dadurch ergibt sich bei solchen Folien eine Farbsprenkelung.

Aus der gattungsbilden den Druckschrift Kunststoffberater 7/8/1968, Armaturenbrett-Fertigung nach der PVC-Powder-Slush-Technologie, Dr. R. Saffert, S. 51 bis 53 ist es bekannt, Slush-Häute mit Pimenten einzufärben. Dabei ist auch erwähnt, daß die Pigmente beim Sinterprozeß nicht so gut aufgeschlossen werden, wie beim Kalandrieren.

Aus der EP 0 176 274 A2 ist ein dreidimensionaler mehrfarbiger Kunststoffkörper und ein Verfahren zur seiner Herstellung durch Powder-Slush-Technologie bekannt. Das verwendete Grundmaterial besteht aus Partikeln mit einem transparenten Kern aus Kunststoff und einer äußeren Hülle, welche Farbpigmente umfaßt.

Aus der US 3 253 068 A ist ein Verfahren und eine Vorrichtung zur Herstellung von dekorativen hohlen Bällen bekannt. Dabei werden zur Bildung der Ballhülle farbige Chips nach Art eines Mosaiks durch Kunststoff als Bindemittel verbunden.

Die UK 2 082 108 A betrifft ebenfalls ein Verfahren zur Herstellung von Bällen sowie das nach dem Verfahren hergestellte Produkt. Hier werden Kugeln und Pulver in eine Slushform gegeben und geliert. Zur Erzielung von dekorativen Effekten können auch Metallstreifen zugegeben werden.

Außerdem ist es bekannt, eine einfarbige Folie farbig zu bedrucken. Dabei ergibt sich jedoch aufgrund der endlichen Ausdehnung der Druckwalze eine Wiederholung des Musters. Da die Farbe nur auf die Oberfläche aufgebracht wird, ist die Folie zudem abriebempfindlich.

Die Abriebempfindlichkeit ist auch ein Problem bei Slushhäuten mit farbigen Beimischungen. Der Slushprozeß verhindert nicht, daß sich Farbkonzentrationen auch an der Oberfläche bilden können. Diese sind dann nicht vor Abrieb geschützt.

Der Erfindung liegt die Aufgabe zugrunde, ein Verfahren zur Herstellung von mehrfarbigen Kunststoffolien nach dem Slush-Verfahren sowie nach dem Slush-Verfahren hergestellte mehrfarbige Kunststoffolien dahingehend zu verbessern, daß die Kunststoffolien zuverlässig gegen Abrieb farbiger Anteile geschützt sind.

Diese Aufgabe wird bei einem Verfahren nach dem Oberbegriff des Anspruchs 1 und bei einer Kunststoffolie nach dem Oberbegriff des Anspruchs 10 durch die im jeweiligen Kennzeichen angegebenen Merkmale gelöst.

Vorteilhafte Weiterbildungen der Erfindung sind in den abhängigen Ansprüchen beschrieben.

Wenn das das Slushmaterial bildende farblose oder gleichförmig einfarbige Kunststoffgrundmaterial und das Farbstoffmaterial nach unvollständiger Vermischung warmgesintert werden, bewirkt das Rotieren der Form zum Zwecke einer gleichmäßigen Verteilung des Slushmaterials auf der Formfläche und damit zur Erzielung einer konstanten Foliendicke nur eine geringe weitere Vermischung des Kunststoffgrundmaterials und des Farbstoffmaterials, denn aufgrund des bei Erwärmung eintretenden Gelierens wird der Mischzyklus sehr frühzeitig beendet. Die dem Zufall unterworfene örtliche Konzentrationsverteilung führt stets zu farblich unterschiedlich gestalteten Folien, also sogenannten Unikaten.

Um bei Farbkonzentrationen nahe oder an der Oberfläche der Folie einen Farbabrieb zu verhindern, wird der Farbstoff nicht in reiner Form eingebracht, sondern als eine Vielzahl Farbkörper, die aus einem Farbstoffinhalt und einer den Farbstoffinhalt umschließenden transparenten Kunststoffhülle bestehen. Der Farbstoffinhalt ist durch die Kunststoffhülle umkapselt und so geschützt. Während des Sinterns und Gelierens wird der Farbstoffinhalt in der Kunststoffhülle belassen. Dadurch erhält das fertige Produkt farbabriebfeste Eigenschaften.

Für die Kunststoffhülle kann ein gegenüber dem Kunststoffgrundmaterial höherschmelzendes Material verwendet werden. Alternativ oder zusätzlich kann für die Kunststoffhülle ein vernetztes Material verwendet werden. Diese Maßnahmen stellen sicher, daß die kapselnden oder fixierenden Eigenschaften der Kunststoffhülle beim Warmsintern zuverlässig erhalten bleiben.

Als Material für die Kunststoffhülle und/oder das Kunststoffgrundmaterial können Polypropylen, Polyethylen, Polyamid, Polyester Polyacetal, Polyacryl, Polyacrylnitril, Polyurethan, Epoxidharz, EPDM, POM oder PVC verwendet werden. Die Auswahl kann nach Härte, Erweichungstemperatur, Recycelbarkeit, Vernetzbarkeit, Verfügbarkeit, Beschaffungskosten und Schmelztemperaturabstimmung von Kunststoffgrundmaterial einerseits und Kunststoffhülle andererseits getroffen werden.

Um das Erscheinungsbild der Folien durch die Form und Art des Farbstoffmaterials zu beeinflussen, kann der Farbstoffinhalt aus Fasern, Agglomeraten, d.h. durch Haftmittel verbundene Farbstotfpartikel oder Pigmente, Kugelkonzentraten, d.h. zu Kugelform gewachsene Partikel versprühter Lacklösungen oder Pulver, auch in einer Kombination zweier, mehrerer oder aller dieser Formen bestehen. Als Farbarten sind organische, anorganische oder metallische Farben geeignet.

Bei Verwendung mehrerer Farben können die Farbkörper nach Farben getrennt oder gemischt zugeführt werden. Dabei besteht die Möglichkeit, daß zur Herstellung einer aus Grundfarben zusammengesetzten Mischfarbe die Farbkörper einer Provenienz oder mehrerer Provenienzen vor der Zuführung intensiv gemischt wird.

Ferner kann durch den Zeitpunkt der Zugabe des Farbstoffmaterials zum Kunststoffgrundmaterial der Vermischungsgrad beeinflußt werden.

Nachfolgend wird die Erfindung anhand dreier Ausführungsbeispiele erläutert, die in der Zeichnung dargestellt sind. Darin zeigen;
- Fig. 1: eine nach dem Verfahren erzielte Oberflächenansicht einer Kunststoffolie mit lederartiger Struktur und metallischen Farbstoffinhalten,
- Fig. 2: eine nach dem Verfahren erzielte Oberflächenansicht einer Kunststoffolie mit Farbstoffinhalten in Faserform und Pulverform und
- Fig. 3: eine nach dem Verfahren erzielte Oberflächenansicht einer Kunststoffolie mit Farbstoffinhalten in Pulverform.

Die Herstellung einer mehrfarbigen thermoplastischen Kunststoffolie erfolgt nach dem an sich bekannten Slushverfahren, bei dem Slushmaterial in eine beheizbare Form gefüllt und diese Form anschließend rotiert wird, so daß sich das Slushmaterial auf der Formfläche der Form verteilt, durch Erwärmung sintert und geliert. Dabei kann das Slushmaterial zunächst in einem Mischer vorbereitet werden, indem Kunststoffgrundmaterial aus einer oder mehreren Komponenten gemischt und kurz vor Beendigung des Mischvorganges Farbstoffmaterial zudosiert wird, so daß nur eine unvollständige Vermischung mit dem Kunststoffgrundmaterial stattfindet. Das so erhaltene Slushmaterial wird dann in die beheizbare Form gefüllt und gesintert.

Weiterhin ist es möglich, auch Kunststoffgrundmaterial und Farbstoffmaterial unvermischt in die Form zu geben und zu sintern, wobei dann durch die Rotation eine gewisse Vermischung stattfindet.

Der Vorteil warmgesinterter, also nach dem Slushverfahren hergestellter Folien, gegenüber Tiefziehfolien besteht darin, daß sie spannungfrei sind. Geometrische Muster bleiben so in der ursprünglichen Form erhalten, werden also nicht durchs Tiefziehen verzerrt.

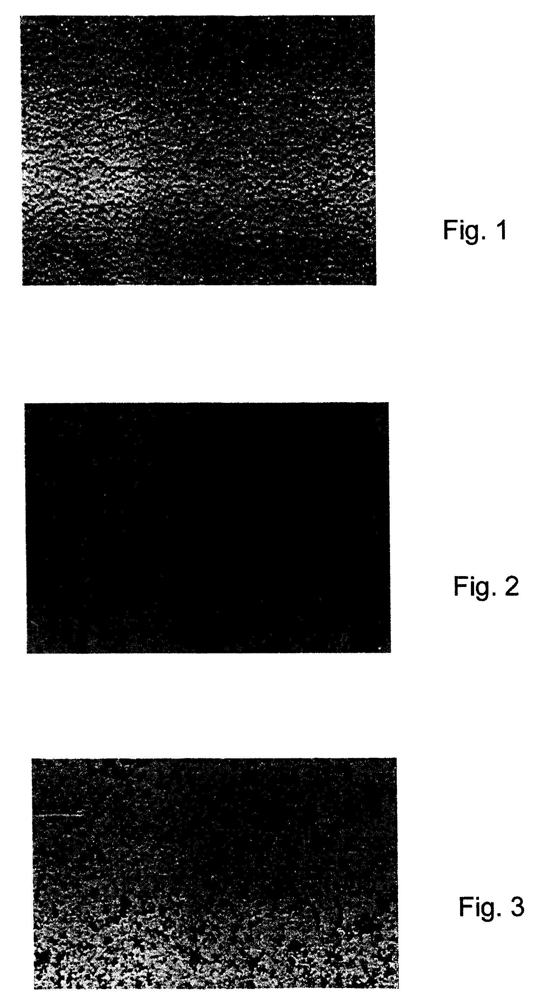

In Fig. 1 ist die Oberfläche einer Folie vergrößert abgebildet, die in einer Form mit lederartiger Struktur gesintert wurde. Als Kunststoffgrundmaterial diente ein gleichmäßig schwarz gefärbtes Material, in das eine geringe Menge Farbstoffmaterial aus Farbkörpern mit metallischen Farbstoffinhalten eingebracht wurde. Es wurde so ein dezenter Metalliceffekt erzielt.

Fig. 2 zeigt die Oberfläche einer Folie vergrößert abgebildet, die ein graues Kunststoffgrundmaterial mit Farbkörpern aus helleren und aus dunkleren Farbstoffinhalten umfaßt. Die helleren Farbstoffinhalte besitzen eine faserförmige Gestalt, während die dunkleren Farbstoffinhalte Pulverform haben.

Die Oberfläche der Folie gemäß Fig. 3 läßt ebenfalls ein graues Kunststoffgrundmaterial erkennen. Als Farbstoffmaterial wurden ausschließlich Farbkörper aus dunklen pulverförmigen Farbstoffinhaltenverwendet. Die Konzentration der Farbkörper ist hier sehr unterschiedlich.

## Patentansprüche

1. Verfahren zur Herstellung einer mehrfarbigen thermoplastischen Kunststoffolie, indem Slushmaterial aus einem farblosen oder gleichförmig einfarbigen Kunststoffgrundmaterial und einem mit diesem unvollständig vermischten Farbstoffmaterial in eine beheizbare und rotierbare Form mit einer Formfläche eingebracht wird, die Form auf eine Formtemperatur aufgeheizt und in Rotation versetzt wird, so daß sich das Slushmaterial an der Formfläche verteilt und ablagert, das Slushmaterial anschließend sintert und geliert und nach Abkühlung der Form die Kunststoffolie entformt wird, dadurch gekennzeichnet, daß das Farbstoffmaterial in Gestalt einer Vielzahl Farbkörpern zugeführt wird, die aus einem Farbstoffinhalt und einer den Farbstoffinhalt umschließenden transparenten Kunststoffhülle bestehen und daß der Farbstoffinhalt während des Sinterns und Gelierens in der Kunststoffhülle belassen wird.

2. Verfahren nach Anspruch 1, dadurch gekennzeichnet, daß für die Kunststoffhülle ein gegenüber dem Kunststoffgrundmaterial höherschmelzendes Material verwendet wird.

3. Verfahren nach Anspruch 1 oder 2, dadurch gekennzeichnet, daß für die Kunststoffhülle ein vernetztes Material verwendet wird.

4. Verfahren nach einem der Ansprüche 1 bis 3, dadurch gekennzeichnet, daß für die Kunststoffhülle und/oder das Kunststoffgrundmaterial Polypropylen, Polyethylen, Polyamid, Polyester Polyacetal, Polyacryl, Polyacrylnitril, Polyurethan, Epoxidharz, EPDM, POM oder PVC verwendet wird.

5. Verfahren nach einem der Ansprüche 1 bis 4, dadurch gekennzeichnet, daß für den Farbstoffinhalt Fasern, Agglomerate, Kugelkonzentrate oder Pulver verwendet werden.

6. Verfahren nach einem der Ansprüche 1 bis 5, dadurch gekennzeichnet, daß für den Farbstoffinhalt organische, anorganische oder metallische Farben verwendet werden.

7. Verfahren nach einem der Ansprüche 1 bis 6, dadurch gekennzeichnet, daß die Farbkörper dem Kunststoffgrundmaterial außerhalb der Form zugemischt werden.

8. Verfahren nach einem der Ansprüche 1 bis 6, dadurch gekennzeichnet, daß die Farbkörper und das Kunststoffgrundmaterial vor Aufheizen und Rotieren der Form gleichzeitig oder nacheinander in die Form gefüllt werden.

9. Verfahren nach einem der Ansprüche 1 bis 6, dadurch gekennzeichnet, daß zuerst das Kunststoffgrundmaterial in die Form gefüllt wird und nach Aufheizen und Rotieren der Form die Farbkörper nachträglich zugesetzt werden.

10. Mehrfarbige thermoplastische Kunststoffolie aus einem farblosen oder gleichförmig einfarbigen Kunststoffgrundmaterial und einem zusätzlichen Farbstoffmaterial, welche unter unvollständiger Vermischung von Kunststoffgrundmaterial und Farbstoffmaterial nach einem Warm-Sinterverfahren in einer beheizbaren und rotierbaren Form gemäß Anspruch 1 hergestellt ist, dadurch gekennzeichnet, daß das Farbstoffmaterial eine Vielzahl Farbkörpern umfaßt, die aus einem Farbstoffinhalt und einer den Farbstoffinhalt umschließenden transparenten Kunststoffhülle bestehen.

11. Mehrfarbige thermoplastische Kunststoffolie nach Anspruch 10, dadurch gekennzeichnet, daß die Kunststoffhülle einen gegenüber dem Kunststoffgrundmaterial höheren Schmelzpunkt aufweist.

12. Mehrfarbige thermoplastische Kunststoffolie nach Anspruch 10 oder 11, dadurch gekennzeichnet, daß die Kunststoffhülle ein vernetztes Material ist.

13. Mehrfarbige thermoplastische Kunststoffolie nach einem der Ansprüche 10 bis 12, dadurch gekennzeichnet, daß die Kunststoffhülle und/oder das Kunststoffgrundmaterial aus Polypropylen, Polyethylen, Polyamid, Polyester Polyacetal, Polyacryl, Polyacrylnitril, Polyurethan, Epoxidharz, EPDM, POM oder PVC bestehen.

## Claims

1. Process for producing a multicoloured thermoplastic sheet, in that slush material from a colourless or uniformly single-colour plastic matrix and a dye material incompletely mixed therewith is introduced into a heatable and rotatable mould with a mould surface, the mould is heated to moulding temperature and rotated, so that the slush material is distributed and deposited on the mould surface, the slush material is then sintered and gelled and following the cooling of the mould the plastic sheet is removed therefrom, characterized in that the dye material is supplied in the form of a plurality of pigments, which comprise a dye area and a transparent plastic sleeve surrounding the dye area and that the dye area is left in the plastic sleeve during sintering and gelling.

2. Process according to claim 1, characterized in that a higher melting point material than the plastic matrix is used for the plastic sleeve.

3. Process according to claim 1 or 2, characterized in that a crosslinked material is used for the plastic sleeve.

4. Process according to one of the claims 1 to 3, characterized in that polypropylene, polyethylene, polyamide, polyester, polyacetal, polyacrylate, polyacrylonitrile, polyurethane, epoxy resin, EPDM, POM or PVC is used for the plastic sleeve and/or plastic matrix.

5. Process according to one of the claims 1 to 4, characterized in that fibres, agglomerates, spherical concentrates or powders are used for the dye area.

6. Process according to one of the claims 1 to 5, characterized in that organic, inorganic or metallic colours are used for the dye area.

7. Process according to one of the claims 1 to 6, characterized in that the pigments are admixed with the plastic matrix outside the mould.

8. Process according to one of the claims 1 to 6, characterized in that the pigments and plastic matrix are simultaneously or successively filled into the mould prior to the heating and rotating of the latter.

9. Process according to one of the claims 1 to 6, characterized in that firstly the plastic matrix is filled into the mould and the pigments are added following the heating and rotating of the mould.

10. Multicoloured thermoplastic sheet from a colourless or uniformly single-colour plastic matrix and an additional dye material, which, accompanied by the incomplete mixing of the plastic matrix and the dye material, is produced according to a hot sintering process in a heatable, rotary mould according to claim 1, characterized in that the dye material incorporates a plurality of pigments, which comprise a dye area and a transparent plastic sleeve surrounding the dye area.

11. Multicoloured thermoplastic sheet according to claim 10, characterized in that the plastic sleeve has a higher melting point than the plastic matrix.

12. Multicoloured thermoplastic sheet according to claim 10 or 11, characterized in that the plastic sleeve is a crosslinked material.

13. Multicoloured thermoplastic sheet according to one of the claims 10 to 12, characterized in that the plastic sleeve and/or plastic matrix comprise polypropylene, polyethylene, polyamide, polyester, polyacetal, polyacrylate, polyacrylonitrile, polyurethane, epoxy resin, EPDM, POM or PVC.

## Revendications

1. Procédé de fabrication d'un film thermoplastique multicolore, dans lequel on introduit un matériau de moulage par embouage en matière de base en plastique, incolore ou unicolore uniforme, et une matière colorante mélangée partiellement avec elle dans un moule chauffable et rotatif comportant une surface de moulage, le moule est porté à une température de moulage et mis en rotation, de manière à répartir et déposer sur la surface de moulage le matériau de moulage par embouage pour qu'il soit ensuite aggloméré et gélifié, et, après refroidissement du moule, le film plastique est démoulé, caractérisé en ce que la matière colorante est introduite sous forme d'une pluralité de corps colorants composée d'un contenu colorant et d'une gaine en plastique transparente entourant le contenu colorant, et en ce que le contenu colorant est laissé dans la gaine en plastique pendant l'agglomération et la gélification.

2. Procédé suivant la revendication 1, caractérisé en ce que, pour la gaine en plastique, on utilise une matière de point de fusion élevé par rapport à la matière de base en plastique.

3. Procédé suivant la revendication 1 ou 2, caractérisé en ce que, pour la gaine en plastique, on utilise une matière réticulée.

4. Procédé suivant l'une des revendications 1, caractérisé en ce que, pour la gaine en plastique et/ou la matière de base en plastique, on utilise un polypropylène, un polyéthylène, un polyamide, un polyacétal de polyester, un polyacrilique, un polynitrile acrylique, un polyuréthanne, une résine époxyde, un EPDM, un POM ou un PVC.

5. Procédé suivant l'une des revendications 1 à 4, caractérisé en ce que, pour le contenu colorant, on utilise des fibres, des agglomérés, des concentrés en boules ou de la poudre.

6. Procédé suivant l'une des revendications 1 à 5, caractérisé en ce que, pour le contenu colorant, on utilise des colorants organiques, inorganiques ou métalliques.

7. Procédé suivant l'une des revendications 1 à 6, caractérisé en ce que les corps colorants sont mélangés à la matière de base en plastique à l'extérieur du moule.

8. Procédé suivant l'une des revendications 1 à 6, caractérisé en ce qu'avant le chauffage et la rotation du moule, les corps colorants et la matière de base en plastique sont mis dans le moule en même temps ou l'un après l'autre.

9. Procédé suivant l'une des revendications 1 à 6, caractérisé en ce qu'on met d'abord la matière de base en plastique, puis après chauffage et rotation du moule, on ajoute postérieurement les corps colorants.

10. Film thermoplastique multicolore composé d'une matière de base en plastique, incolore ou unicolore uniforme, et d'une matière colorante supplémentaire, qui est fabriquée par mélange partiel de matière de base en plastique et de matière colorante, après un procédé d'agglomération à chaud dans un moule chauffable et rotatif suivant la revendication 1, caractérisé en ce que la matière colorante comporte une pluralité de corps colorants qui se composent d'un contenu colorant et d'une gaine en plastique transparente, entourant le contenu colorant.

11. Film thermoplastique multicolore suivant la revendication 10, caractérisé en ce que la gaine en plastique a un point de fusion élevé par rapport à la matière de base en plastique.

12. Film thermoplastique multicolore suivant la revendication 10 ou 11, caractérisé en ce que la gaine en plastique est une matière réticulée.

13. Film thermoplastique multicolore suivant l'une des revendications 10 à 12, caractérisé en ce que la gaine en plastique et/ou la matière de base en plastique comprennent un polypropylène, un polyéthylène, un polyamide, un polyacétal de polyester, un polyacrilique, un polynitrile acrylique, un polyuréthanne, une résine époxyde, un EPDM, un POM ou un PVC.
